# EUROPÄISCHE PATENTSCHRIFT

(11) **EP 1 179 576 B1**
(45) Veröffentlichungstag und Bekanntmachung des Hinweises auf die Patenterteilung: **06.08.2003**
(21) Anmeldenummer: 01118066.8
(22) Anmeldetag: 26.07.2001
(51) Int. Cl.: C09J 5/02, B08B 6/00, B60S 1/08, H05F 3/04

(54) **Verfahren zum Aufkleben eines Bauteils auf eine Gegenfläche und Vorrichtung zu seiner Durchführung**
Process for the adhesion of a component to a surface and apparatus for such a process
Procédé de collage d'un elément sur une surface correspndente et dispositif approprié

(30) Priorität: 08.08.2000 DE 10038516
(43) Veröffentlichungstag der Anmeldung: 13.02.2002
(73) Patentinhaber: FFT FLEXIBLE FERTIGUNGSTECHNIK GmbH & Co. KG, 35325 Mücke (DE)
(72) Erfinder: Schneegans, Jochen, Dr.-Ing., 56237 Wittgert (DE)
(74) Vertreter: Schlagwein, Udo, Dipl.-Ing.

(56) Entgegenhaltungen:
- EP-A- 1 104 794
- DE-A- 3 942 422
- DE-A- 19 902 922
- GB-A- 910 948
- US-A- 3 156 847
- "IONIZED AIR KNIFE REMOVES PARTICULATES, DUST" AUTOMOTIVE ENGINEERING, SOCIETY OF AUTOMOTIVE ENGINEERS. WARRENDALE, US, Bd. 105, Nr. 8, 1. August 1997 (1997-08-01), Seite 67 XP000702365 ISSN: 0098-2571

## Beschreibung

Die Erfindung betrifft ein Verfahren zum Aufkleben eines mit einer Klebeschicht und einer Schutzfolie versehenen Bauteils auf eine Gegenfläche, bei welchem zunächst die Schutzfolie entfernt und dann das Bauteil auf die Gegenfläche gedrückt wird, insbesondere zum Aufkleben eines Regensensors auf eine Windschutzscheibe eines Kraftfahrzeugs. Weiterhin betrifft die Erfindung eine Vorrichtung zur Durchführung dieses Verfahrens.

Bei mit einer Klebeschicht versehenen Bauteilen zieht man üblicherweise eine auf der Klebeschicht befindliche Schutzfolie unmittelbar vor dem Aufkleben des Bauteils auf ein anderes Bauteil ab und drückt anschließend das Bauteil mit der Klebeschicht gegen die Fläche, auf der es aufgeklebt werden soll. Dabei ist darauf zu achten, dass nach dem Abziehen der Schutzfolie kein Staub auf die Klebeschicht gelangt, weil dadurch die Güte der Klebung beeinflusst wird. Wenn ein Bauteil auf eine Glasfläche geklebt werden muss, beispielsweise ein Regensensor innenseitig auf eine Windschutzscheibe oder ein Fahrzeuginnenspiegel innenseitig gegen eine Windschutzscheibe, dann ergibt sich die Besonderheit, dass die Klebeschicht durch die Windschutzscheibe hindurch sichtbar bleibt. Üblicherweise bildet man die Klebeschicht schwarz aus, damit sie optisch im Bereich des Schwarzdruckes der Windschutzscheibe nicht unerwünscht stark auffällt. Gelangen jedoch nach dem Abziehen der Schutzfolie Staubteilchen auf die Klebeschicht, dann sind diese nach dem Verkleben des Bauteils als helle Punkte auf der schwarzen Klebeschicht sichtbar, was unschön aussieht und den Eindruck einer schlechten Verarbeitung macht.

Man versucht bisher, solche Verunreinigungen dadurch zu vermeiden, dass man das Aufkleben des Bauteils in möglichst sauberer Umgebung durchführt, was jedoch nur begrenzten Erfolgt bringt. Da beispielsweise bei Regensensoren die Trägerplatte aus Kunststoff besteht, ist man auch schon auf den Gedanken gekommen, dass elektrostatische Aufladungen des Kunststoffteils Ursache für ein Anziehen von Staub sein können und hat solche Bauteile nach dem Abziehen der Schutzfolie mittels eines Ionenblasgerätes elektrostatisch entladen, was allerdings auch keinen vollen Erfolg brachte. Bessere Ergebnisse bezüglich einer Staubfreiheit ergeben sich, wenn man Bauteile mit einer Schutzfolie aus einem elektrisch leitfähigen Material wählt. Solche Schutzfolien sind jedoch erheblich teuerer als Schutzfolien aus Kunststoff.

Der Erfindung liegt das Problem zugrunde, ein Verfahren zum Aufkleben eines mit einer Klebeschicht versehenen Bauteils derart auszubilden, dass die Gefahr der Anlagerung von Staubpartikeln auf der Klebeschicht nach dem Abziehen der Schutzfolie möglichst gering ist. Weiterhin soll eine Vorrichtung zur Durchführung dieses Verfahrens geschaffen werden.

Das erstgenannte Problem wird erfindungsgemäß dadurch gelöst, dass während des Abziehens der Schutzfolie mit einem Ionenblasgerät in den sich beim Abziehen der Schutzfolie öffnenden Spalt zwischen der Klebeschicht und der Schutzfolie ein ionisierter Gasstrom geblasen wird.

Das zweitgenannte Problem wird dadurch gelöst, dass die Vorrichtung ein Ionenblasgerät aufweist, welches zu dem sich beim Abziehen der Schutzfolie öffnenden Spalt zwischen der Klebeschicht und der Schutzfolie ausgerichtet ist.

Dieses Verfahren und die erfindungsgemäße Vorrichtung bauen auf der Erkenntnis auf, dass es durch das Abziehen der Schutzfolie zu einem elektrostatischen Aufladen des Bauteils kommt, die so stark sein kann, dass schon beim Abziehen oder unmittelbar danach Staubpartikel angezogen werden und auf die Klebeschicht gelangen. Da gemäß der Erfindung die Klebeschicht schon während des Abziehens der Schutzfolie mit einem Ionenblasgerät angeblasen wird, kommt es schon beim Entstehen einer elektrostatischen Ladung zu einer Neutralisierung oder sogar zu einer Staub abstoßenden Aufladung. Deshalb lässt sich eine völlige Reinheit der Klebeschicht erreichen, ohne dass übermäßig hohe Anforderungen an die Reinheit der Umgebung gestellt werden müssen, in der das Aufkleben der Bauteile erfolgt. Das erfindungsgemäße Verfahren eignet sich daher ganz besonders für das Ankleben von Regensensoren innenseitig gegen eine Windschutzscheibe.

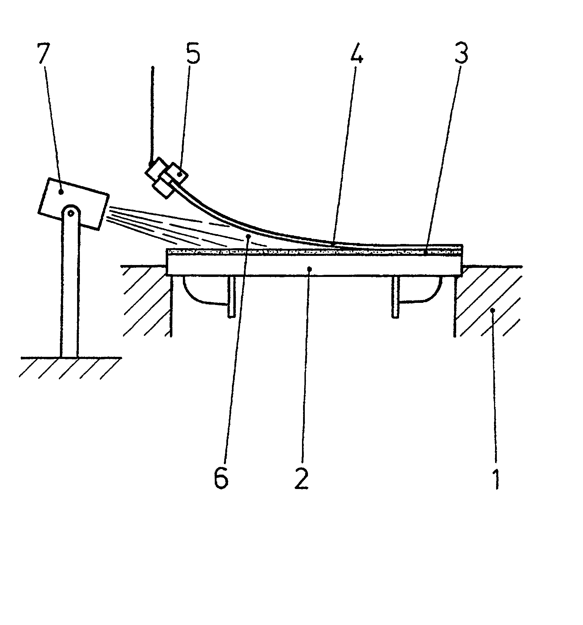

Zur weiteren Verdeutlichung der Erfindung ist in der Zeichnung der Arbeitsgang des Abziehens der Schutzfolie von einem Bauteil dargestellt und wird nachfolgend beschrieben.

Die Zeichnung zeigt ein Spannteil 1, mit welchem ein Bauteil 2 gespannt ist, bei dem es sich um einen Regensensor für ein Kraftfahrzeug handelt. Das Bauteil 2 hat eine Klebeschicht 3, welche zunächst von einer Schutzfolie 4 abgedeckt ist. Die Zeichnung zeigt, wie diese Schutzfolie 4 mittels eines Greifers 5 von der Klebeschicht 3 entfernt wird.

Während des Abziehens der Schutzfolie 4 entsteht zwischen ihr und der Klebeschicht 3 ein sich zu der Seite hin im Querschnitt erweiternder Spalt 6. Wichtig für das erfindungsgemäße Verfahren und die entsprechende Vorrichtung ist, dass während des Abziehens der Schutzfolie 4 mittels eines Ionenblasgerätes 7 in diesen Spalt 6 ionisierte Luft geblasen wird. Dadurch wird die beim Abziehen der Schutzfolie 4 entstehende elektrostatische Ladung sofort neutralisiert.

### Bezugszeichenliste

- 1: Spannteil
- 2: Bauteil
- 3: Klebeschicht
- 4: Schutzfolie
- 5: Greifer

- 6: Spalt
- 7: Ionenblasgerät

## Patentansprüche

1. Verfahren zum Aufkleben eines mit einer Klebeschicht und einer Schutzfolie versehenen Bauteils auf eine Gegenfläche, bei welchem zunächst die Schutzfolie entfernt und dann das Bauteil auf die Gegenfläche gedrückt wird, insbesondere zum Aufkleben eines Regensensors auf eine Windschutzscheibe eines Kraftfahrzeugs, **dadurch gekennzeichnet, dass** während des Abziehens der Schutzfolie mit einem Ionenblasgerät in den sich beim Abziehen der Schutzfolie öffnenden Spalt zwischen der Klebeschicht und der Schutzfolie ein ionisierter Gasstrom geblasen wird.

2. Vorrichtung zur Durchführung des Verfahrens nach Anspruch 1, welche Spannmittel zum Halten eines Bauteils und einen Greifer zum Greifen und Abziehen einer Schutzfolie von einer Klebeschicht des Bauteils hat, **dadurch gekennzeichnet, dass** sie zusätzlich ein Ionenblasgerät (7) aufweist, welches zu dem sich beim Abziehen der Schutzfolie (4) öffnenden Spalt (6) zwischen der Klebeschicht (3) und der Schutzfolie (4) ausgerichtet ist.

## Claims

1. Method for sticking a component provided with an adhesive layer and a protective foil on to an opposite surface, in which the protective foil is first stripped off and the component is then pressed on to the opposite surface, in particular for sticking a rain sensor on to the windscreen of a motor vehicle, **characterized in that** during the stripping of the protective foil, an ionized gas flow is blown with an ion air gun into the gap opening up between the adhesive layer and the protective foil during the stripping of the protective foil.

2. Apparatus for carrying out the method according to Claim 1 which has clamping means to hold a component and a gripper for gripping a protective foil and stripping it from an adhesive layer of the component, **characterized in that** it also has an ion air gun (7) trained on the gap (6) opening up between the adhesive layer (3) and the protective foil (4) during the stripping of the protective foil (4).

## Revendications

1. Procédé pour coller une pièce, dotée d'une couche de colle et d'un film protecteur, sur une contre-surface, dont on a d'abord enlevé le film protecteur avant de l'appuyer sur la contre-surface, en particulier pour coller un capteur de pluie sur un pare-brise d'un véhicule, **caractérisé en ce que**, pendant le retrait du film protecteur, on souffle, avec un souffleur d'ions, un courant de gaz ionisé dans la fente qui s'ouvre, lorsqu'on retire le film protecteur, entre la couche de colle et le film protecteur.

2. Dispositif pour l'exécution du procédé selon revendication 1, comportant des moyens de serrage pour maintenir une pièce et un préhenseur pour saisir et retirer un film protecteur d'une couche de colle de la pièce, **caractérisé en ce qu'**il présente, en complément, un souffleur d'ions (7) qui est aligné sur la fente (6), qui s'ouvre lors du retrait du film protecteur (4), entre la couche de colle (3) et le film protecteur (4).
